# EUROPEAN PATENT SPECIFICATION

(11) **EP 0 797 551 B1**
(45) Date of publication and mention of the grant of the patent: **05.12.2001**
(21) Application number: 95920630.1
(22) Date of filing: 24.05.1995
(51) Int. Cl.: C04B 11/30

(54) **CEMENTITIOUS GYPSUM-CONTAINING COMPOSITIONS AND MATERIALS MADE THEREFROM**
ZEMENTARTIGE, GIPSENTHALTENDE ZUSAMMENSETZUNGEN UND HERGESTELLTE MATERIALIEN DIE DIESE VERWENDEN
COMPOSITIONS CIMENTAIRES CONTENANT DU GYPSE ET MATERIAUX REALISES A PARTIR DE CELLES-CI

(30) Priority: 03.06.1994 US 253333; 07.02.1995 US 384756
(43) Date of publication of application: 01.10.1997
(73) Proprietor: National Gypsum Properties LLC, Charlotte, North Carolina 28211 (US)
(72) Inventor: STAV, Elisha, Amherst, NY 14226 (US); BURKARD, Edward, A., East Amherst, NY 14051 (US); FINKELSTEIN, Ronald, S., East Amherst, NY 14051 (US)
(74) Representative: Darby, David Thomas
(86) International application number: US9506543
(87) International publication number: WO9533698

(56) References cited:
- DE-A- 2 430 683
- DE-A- 3 230 406

## Description

### BACKGROUND OF THE INVENTION

### Field of the Invention

The invention relates to cementitious gypsum-containing compositions and in particular to cementitious construction materials such as floor underlayments, backer boards, floor and road patching materials, fiberboard, fire-proofing sprays, and fire-stopping materials.

### Description of Related Technology

Construction materials, such as backer boards for showers and floor underlayments, typically do not contain gypsum because gypsum-containing materials are usually not water resistant. However, gypsum is a desirable component in construction materials due to its rapid cure and early strength characteristics. Attempts to improve the water-resistance of gypsum boards by mixing Portland cement and gypsum (calcium sulfate hemihydrate) have met with limited success because such a mixture can result in the formation of ettringite, which causes expansion of the gypsum/Portland cement product and thus leads to its deterioration. Ettringites are formed when tricalcium aluminate (3CaO·Al₂O₃) in the Portland cement reacts with sulfate.

A cementitious composition useful as a pavement patching compound which contains Portland cement and alpha gypsum is disclosed in Harris, U.S. Patent No. 4,494,990. The composition also includes a pozzolan source, such as, for example, silica fume, fly ash or blast furnace slag. The Harris patent discloses that the pozzolan blocks the interaction between the tricalcium aluminate and the sulfate from gypsum. The Harris patent discloses mixing a three-component blend of Type I Portland cement, alpha gypsum and silica fume with a fine aggregate to prepare a mortar used to cast mortar cubes for evaluating the strength of the resulting composition.

Ortega et al., U.S. Patent No. 4,661,159 discloses a floor underlayment composition that includes alpha gypsum, beta gypsum, fly ash and Portland cement. The patent also discloses that the floor underlayment material can be used with water and sand or other aggregate to produce a fluid mixture which may be applied to a substrate.

### SUMMARY OF THE INVENTION

It is an object of the invention to overcome one or more of the problems described above.

According to the invention, a cementitious composition includes about 30 wt.% to about 75 wt.% calcium sulfate beta-hemihydrate, about 10 wt.% to about 40 wt.% Portland cement, about 4 wt.% to about 20 wt.% silica fume, and about 1 wt.% to about 40 wt.% pozzolanic filler. The composition is preferably substantially free of alpha-gypsum. The invention further includes construction compositions and materials made from the inventive cementitious composition and methods for making the same.

The invention also provides a water resistant construction material prepared by combining a cementitious composition according to the invention with a slight stoichiometric excess of water. The invention further provides such a water resistant construction material having a thickness of about 1/8 inch (about 3mm).

The invention also provides a board comprising first and second cover sheets and a cementious composition disposed between the first and second cover sheets, the said composition being obtainable by reaction between water and a composition according to the invention.

In some applications, the composition according to the invention preferably comprises about 4 % to about 8 % of silica fume.

Other objects and advantages of the invention will be apparent to those skilled in the art from the following detailed description taken in conjunction with the drawings and the appended claims.

### BRIEF DESCRIPTION OF THE DRAWINGS

Fig. 1 is a cross-sectional view of a covered board according to the invention.

Fig. 2 is a graph depicting compressive strength vs. curing time for a composition #1 according to the invention and a comparative composition #2. In Fig. 2, 1 PSI is about 7kpa.

Fig. 3 is a scanning electron microscope (SEM) micrograph (500x) of a board made from a composition according to the invention disclosed in Example 3.

Fig. 4 is an SEM micrograph (100x) of the board shown in Fig. 3.

Fig. 5 is an SEM micrograph (1000x) of the board shown in Fig. 3.

### DETAILED DESCRIPTION OF THE INVENTION

According to the invention, a composition for use in construction materials is provided which is particularly useful in areas where water resistance is an important consideration, such as for backer boards for baths and showers, floor underlay applications and exterior sheathing boards. Further uses of the inventive composition include materials such as self-leveling floors and road patching materials, fire-proofing sprays, fire-stopping materials, and fiberboard.

Compositions according to the invention include about 30 wt.% to about 75 wt.% calcium sulfate beta-hemihydrate (i.e., beta-gypsum), about 10 wt.% to about 40 wt.% Portland cement (Type III is preferred), about 4 wt.% to about 20 wt.% silica fume, and about 1 wt.% to about 40 wt.% pozzolanic filler.

The beta-gypsum component of the inventive composition is calcium sulfate beta hemihydrate, commonly referred to as stucco. Beta-gypsum is traditionally less expensive than alpha-gypsum. Alpha-hemihydrate powder has a higher apparent density and smaller related surface area than beta-hemihydrate resulting in a lower water requirement for the same workability and a higher compressive strength of the set material. However, boards made from the inventive composition have exhibited more than adequate strength for interior applications such as backer boards and floor underlayments and exterior applications, such as exterior sheeting and eaves.

The Portland cement component of the composition according to the invention is preferably Type III Portland cement (according to ASTM standards). Type III Portland cement cures faster than Type I and Type II Portland cement and exhibits an early high strength.

The silica fume component of the composition according to the invention is an extremely active pozzolan and prevents the formation of ettringite.

The pozzolanic filler component of the composition according to the invention may be a natural or man-made filler that contains a high percentage of amorphous silica. Natural pozzolanic fillers are of volcanic origin and include trass, pumice, and perlite. Man-made pozzolanic fillers include fly ash and Fillite (Fillite Division of Boliden Intertrade, Inc. Atlanta, Georgia). In some applications, 1 to 10 % of Fillite is preferably used.

Pozzolanic fillers contain a high percentage of amorphous silica which possesses little or no cementitious properties. However, in the presence of moisture, pozzolanic fillers have surfaces that are chemically reactive with calcium hydroxide at standard temperatures to form hydrated calcium silicate (CSH) which, in compositions and methods according to the invention, are believed to become a homogeneous part of a cementitious system due also to the presence of the finely divided pozzolan used according to the invention, silica fume. Compositions according to the invention which include both a pozzolanic filler and the finely divided pozzolan, silica fume, result in cementitious materials wherein the transition zone between the filler and a cement paste is densified and thus produces a cured product of higher compressive strength than compositions which utilize a pozzolanic filler alone or a finely divided pozzolan alone. It is believed that the mechanism which causes changes in the microstructure of compositions according to the invention to result in higher compressive strengths is associated with two effects: a pozzolanic effect and a micro-filler effect (due to the fine size and spherical shape of the silica fume).

Compositions for construction materials such as backer boards and floor underlays according to the invention preferably include about 30 wt.% to about 75 wt.% calcium sulfate beta-hemihydrate (about 30 wt.% to about 50 wt.% is preferred), about 10 wt.% to about 40 wt.% Portland cement (about 10 wt.% to about 25 wt.% is preferred), about 4 wt.% to about 20 wt.% silica fume (about 4 wt.% to about 10 wt.% is preferred), and about 10 wt.% to about 40 wt.% a pozzolanic filler (about 25 wt.% to about 35 wt.% is preferred). A preferred filler for use in such construction materials is pumice. Pumice is desirable as it is relatively light weight and can be sized to result in a product of desirable strength and physical properties. For example, Hess Pumice Products Inc. manufactures a size No. 10 pumice aggregate that measures about 93% greater than 1400 microns, while the size No. 5 pumice aggregate has a particle size measurement of about 23% greater than 1400 microns. Although fillers such as calcium carbonate, crystalline silica and different types of clay could be included in the composition, it has been found that the use of a pozzolanic filler results in a product according to the invention having superior properties. As explained above, this is believed to occur because the surfaces of the pozzolanic filler react with free lime to form hydrated calcium silicate (pozzolanic reaction) which becomes part of the product matrix. Such a reaction is only possible with pozzolanic fillers.

The composition according to the invention produces building materials which set up quickly, exhibit high strength and durability, and are water resistant. Furthermore, traditional gypsum board producing machinery may be utilized to produce a board from a composition according to the invention without modification of the machinery. Because the composition according to the invention sets up quickly (typically in three minutes or less), building materials made from the composition can be handled (e.g. sheets can be cut into smaller sheets or boards) much faster than products made from Portland cement alone. Furthermore, unlike traditional gypsum board, boards or other products made from a composition according to the invention do not require kiln drying, and in fact, kiln drying should be avoided.

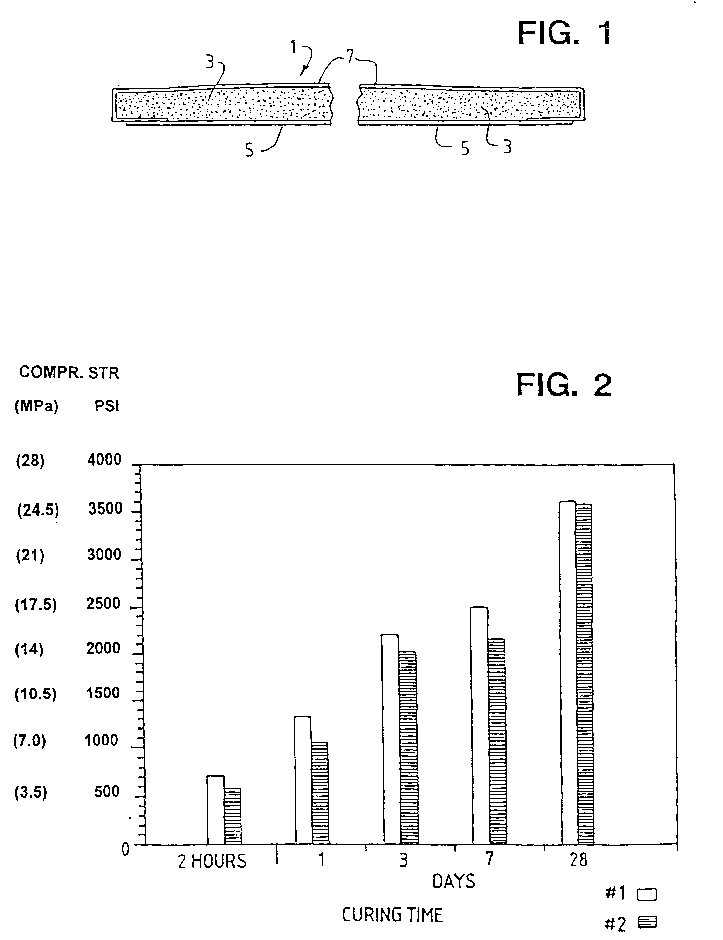

With reference to Figure 1, a backer board 1 according to the invention comprises a core 3 made from a cementitious composition according to the invention and adjacent cover sheets 5 and 7 disposed at either side thereof. Such a board may be manufactured by the following process:

Raw gypsum may be calcined at about 160°C (320°F) to about 175°C (347°F) to form calcium sulfate hemihydrate. The calcined gypsum can be post-ground to a finer particle size if, for example, certain strengths, water requirements, and working properties are desired. The gypsum powder is fed to a mixer and blended with Portland cement, silica fume and a pozzolanic filler. The pozzolanic filler may be pumice, perlite, trass, or fly ash or a mixture thereof. Other ingredients that may be included in the composition are set control additives (e.g. accelerators), water reducing agents, water repellent additives and latex or polymer modifiers. The resulting blend is combined with a slight stoichiometric excess of water to produce a slurry. The slurry, which forms the core 3 of the board, is poured onto a lower, continuous cover sheet 5 which is disposed on a conveyor. Then, an upper continuous cover sheet 7 is placed on the core as it moves on the conveyor. The cover sheets 5 and 7 are preferably made from fiberglass matt, fiberglass scrim, or a composite of both. The cover sheets may also be made from polyethylene, polypropylene or nylon; however, such materials are not as desirable as fiberglass as they are more expensive. As the slurry sets, scrim and mat are imbedded into the slurry matrix during the forming process. As the covered board moves along the conveyor line in a continuous sheet, the board gains sufficient strength so that it can be handled. The board is then cut into sections, (for backer boards, usually either 3 ft. x 5 ft. or 3 ft. x 4 ft. sheets) and transferred to pallets. The board thickness preferably ranges between about 1/8 inch and about 5/8 inch (about 3 mm to about 16 mm). The boards are then preferably stacked and cured from one to seven days (particularly preferred about three days) at a temperature of about 16°C (60°F) to about 27°C (80°F) (i.e. room temperature) and a humidity of about 30 % to about 90 %, especially about 40 % to about 70 %, after which the boards may be sent to a customer. The stacking of the boards advantageously provides a moist environment for curing. The boards may be cured at temperatures and humidities outside of the above-stated ranges resulting in an acceptable product. However, this may extend the curing time. A board according to the invention usually reaches its full strength about fourteen to about twenty-eight days after formation.

When preparing a board or other product according to the invention, the forced drying required for gypsum board should be avoided. An alternative curing procedure is to wrap the boards in plastic wrapping for about three days to retain moisture for continuous curing. Such wrapped boards have exhibited about 50% higher strength than normal gypsum boards of the same density. Also, the wrapped boards develop about 70% to about 80% of their ultimate strength in three days.

When a board or other product having a thickness of about 1/8 inch (about 3 mm) is desired, the cementitious composition thereof includes about 30 wt.% to about 75 wt.% calcium sulfate beta-hemihydrate, about 10 wt.% to about 40 wt.% Portland cement, about 4 wt.% to about 20 wt.% silica fume, and about 1 wt.% to about 40 wt.% pozzolanic filler, resulting in a very strong thin product, especially useful, for example, for floor underlayments. A preferred cementitious composition for use in very thin boards (i.e. about 1/8 inch or 3mm) and floor underlayments includes about 70 wt.% to about 75 wt.% calcium sulfate beta hemihydrate (about 74 wt.% is particularly preferred), about 15 wt.% to about 25 wt.% Portland cement (about 20 wt.% is particularly preferred), about 4 wt.% to about 8 wt.% silica fume (about 6 wt.% is particularly preferred), and about 1 wt.% to about 10 wt.% pozzolanic filler.

Compositions according to the invention may also be used to prepare self-leveling floor compositions and road patching materials. In such materials, a master blend composition according to the invention is prepared which includes about 30 wt.% to about 75 wt.% calcium sulfate beta-hemihydrate (i.e. beta-gypsum) (about 30 wt.% to about 50 wt.% is preferred), about 10 wt.% to about 40 wt.% Portland cement (about 10 wt.% to about 25 wt.% is preferred), about 4 wt.% to about 20 wt.% silica fume (about 4 wt.% to about 8 wt.% is preferred), and about 1 wt.% to about 40 wt.% a pozzolanic filler (about 1 wt.% to about 15 wt.% is preferred; about 1 wt.% to about 5 wt.% particularly preferred). The master blend is then mixed with silica aggregates (i.e., predominately quartz local sand) to form the floor or road patching material.

Preferably, a self-leveling floor composition according to the invention includes (i) about 25 wt.% to about 75 wt.% of the master blend; and (ii) about 75 wt.% to about 25 wt.% sand. Most preferably, a self-leveling floor composition master blend includes about 71 wt.% calcium sulfate beta-hemihydrate, about 20 wt.% Portland cement, about 6 wt.% silica fume and about 2 wt.% Fillite pozzolanic filler. Because of its low density, Fillite addition of amounts as low as about 1 wt.% of the composition provide a considerable volume of filler (see Example 2, Table II for Fillite physical properties).

A road patching composition according to the invention includes (i) about 25 wt.% to about 100 wt.% of the master blend described herein with respect to the self-leveling floor compositions of the invention; and (ii) about 75 wt.% to about 0 wt.% sand.

Compositions according to the invention may also be used in fiberboards according to the invention. Such fiberboards include (i) about 70 wt.% to about 90 wt.% of the master blend described herein with respect to the self-leveling floor compositions and road patching compositions of the invention; and (ii) about 30 wt.% to about 10 wt.% of a fiber component. The fiber component is preferably selected from the following: wood fibers, paper fibers, glass fibers, polyethylene fibers, polypropylene fibers, nylon fibers, and other plastic fibers.

Fire-proofing sprays and fire-stopping materials may also be prepared utilizing compositions according to the invention. Such fire-proofing and fire-stopping materials include about 30 wt.% to about 75 wt.% calcium sulfate beta-hemihydrate (about 30 wt.% to about 50 wt.% is preferred), about 10 wt.% to about 40 wt.% Portland cement (about 6 wt.% to about 25 wt.% is preferred), about 4 wt.% to about 20 wt.% silica fume (about 4 wt.% to about 10 wt.% is preferred), and about 1 wt.% to about 40 wt.% a pozzolanic filler (about 1 wt.% to about 10 wt.% is preferred). Preferably, the pozzolanic filler is Fillite or perlite or mixtures thereof. Fire-proofing sprays and fire-stopping materials according to the invention also preferably include about 1 wt.% to about 30 wt.% unexpanded vermiculite filler. Such fire-proofing and fire-stopping materials may also include up to about 2 wt.% glass fibers and up to about 2 wt.% of a thickening agent. The thickening agent is preferably selected from the following: cellulose derivatives, acrylic resins and mixtures thereof.

### EXAMPLE 1

A cementitious composition according to the invention was prepared with components set forth in the amounts stated in Table I below:

**TABLE I**

| Material | Weight Percent |
|---|---|
| Beta-gypsum (Stucco) | 45.1 |
| Type III Portland Cement | 19.2 |
| Silica Fume | 9.5 |
| Pumice Filler | 24.6 |
| Perlite | 1.47 |
| W.R.A.¹ | 0.87 |
| Water Repellent Agent² | 0.11 |
| Accelerator (ball-milled CaSo₄·2H₂O gypsum dihydrate³) | 0.042 |

| | |
|---|---|
| ¹ Water reducing agent or wetting agent including lignosulfonates and/or naphthalene sulfonates manufactured by Georgia Pacific Corp. and Henkel Corp., respectively. | |
| ² A silicone product or like material, e.g., Veoceal 2100 and Veoceal 1311 (both TM designations of products manufactured by Wacker Silicone Corp.) | |
| ³ See U.S. Patent Nos. 3,920,465, 3,870,538 and 4,019,920 | |

The materials identified in Table I were mixed and 100 grams thereof was mixed with 35.6 grams of water. About 1 wt.% to about 5 wt.% of a polymer latex (acrylic or SBR) was added to the mixture to improve flexibility. The mixture was then formed into boards according to the invention using a glass matt/scrim composite. The boards were tested for water absorption, nail holding properties, deflection, compression strength (wet and dry), water wicking characteristics and other ASTM specification requirements. The boards met the ASTM specifications with respect to each test.

### EXAMPLE 2

A self-leveling floor composition #1 according to the invention was prepared with the components set forth in the amounts stated in Table II below. A cementitious composition #2 with components also set forth in the amounts stated in Table II below (which did not include a pozzolanic filler) was also prepared.

**TABLE II**

| Material | Composition #1 (weight percent) | Composition #2 (weight percent) |
|---|---|---|
| Beta-Gypsum (Stucco) | 40.0 | 36.1 |
| Type III Portland Cement | 10.8 | 9.8 |
| Silica Fume | 3.24 | 2.96 |
| Fillite 500 Pozzolanic Filler¹ | 1.35 | 0.0 |
| Sand (quartz; crystallized silica) | 43.26 | 49.4 |
| W.R.A.² | 0.9 | 0.82 |
| Retarder³ | 0.06 | 0.06 |
| Anti-foaming agent⁴ | 0.26 | 0.33 |

| | | |
|---|---|---|
| ¹ Fillite Division of Boliden Intertrade, Inc., Atlanta Georgia. Hollow silicate spheres with the following physical properties: average particle density of 0.6-0.8 g/cc; average bulk density of 0.35-0.45 g/cc; and typical particle size of 5-300 microns. | | |
| ² Water reducing agent or wetting agent including lignosulfonates and/or naphthalene sulfonates manufactured by Georgia Pacific Corp. and Henkel Corp., respectively. | | |
| ³ A natural protein-based material. | | |
| ⁴ A vegetable oil-based dry powder. | | |

In order to form a floor composition of a smooth consistency, composition #1 was mixed with about 26 wt.% water and composition #2 was mixed with about 24 wt.% water. The density of composition #1 was 107 lbs./ft³(about 1715 kg/m³). The density of composition #2 was 111.62 lbs./ft³(about 1790 kg/m³).

Both compositions were allowed to dry at about 21°C (70°F) and a relative humidity of about 50%. The compressive strengths of samples (2 inch by 2 inch by 2 inch cubes - about 51 mm x 51 mm x 51 mm) of each of the compositions were tested after 2 hours of drying, and after 1, 3, 7 and 28 days by pressing in an Instron press according to ASTM C472-9A.

The results of the compressive strength tests are shown in Fig. 2. Composition #1 according to the invention exhibited a greater compressive strength than Composition #2 for all samples tested. Although the compressive strengths of both compositions were similar after curing for 28 days, the advantage of a composition according to the invention is evident when the densities of the two compositions are taken into consideration. Typically, a composition having a higher density should also exhibit a higher compressive strength. However, in this instance, Composition #1 according to the invention had a lower density than Composition #2, and yet exhibited a slightly higher compressive strength.

### EXAMPLE 3

A cementitious composition according to the invention was prepared with components set forth in the amounts stated in Table III below:

**TABLE III**

| Material | Weight Percent |
|---|---|
| Beta-gypsum (Stucco) | 35.9 |
| Type III Portland Cement | 15.6 |
| Silica Fume | 7.8 |
| Pumice Filler | 39.5 |
| W.R.A.¹ | 0.87 |
| Water Repellent Agent² | 0.11 |
| Accelerator (ball-milled CaSo₄·2H₂O gypsum dihydrate³) | 0.058 |

| | |
|---|---|
| ¹ Water reducing agent or wetting agent including lignosulfonates and/or naphthalene sulfonates manufactured by Georgia Pacific Corp. and Henkel Corp., respectively. | |
| ² A silicone product or like material, e.g., Veoceal 2100 and Veoceal 1311 (both TM designations of products manufactured by Wacker Silicone Corp.) | |
| ³ See U.S. Patent Nos. 3,920,465, 3,870,538 and 4,019,920 | |

The materials identified in Table III were mixed and 100 grams thereof was mixed with 35.6 grams of water. About 1 wt.% to about 5 wt.% of a polymer latex (acrylic or SBR) was added to the mixture to improve flexibility. The mixture was then formed into boards according to the invention using a glass matt/scrim composite. The boards were tested for water absorption, nail holding properties, deflection, compression strength (wet and dry), water wicking characteristics and other ASTM specification requirements. The boards met the ASTM specifications with respect to each test.

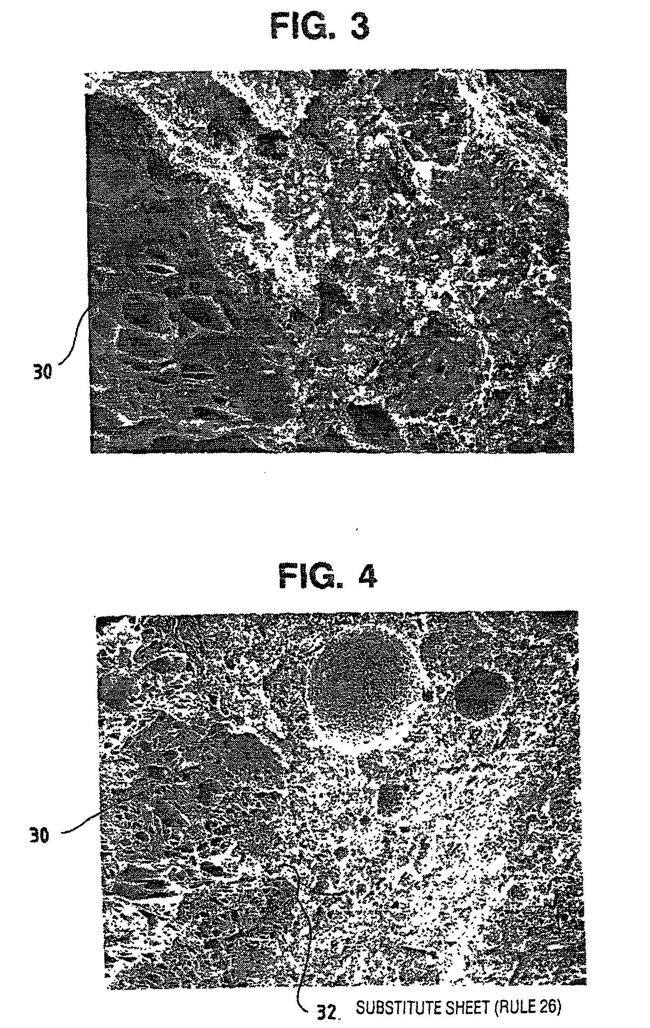

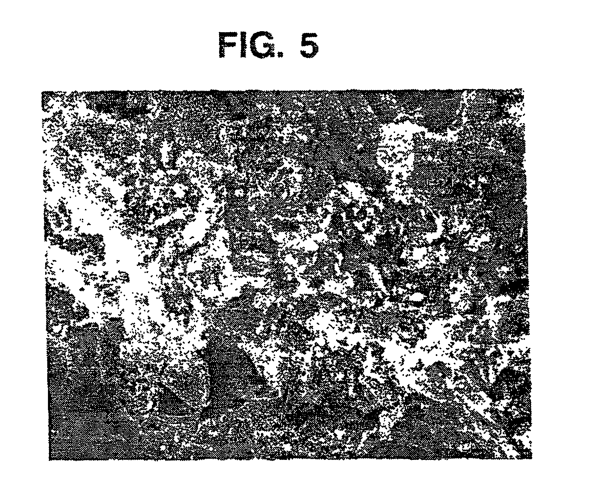

The scanning electron microscope (SEM) micrographs shown in Figs. 3, 4, and 5 were made of a cured sample of Example 3. An arrow 30 points to pumice in the sample, illustrating that in a composition according to the invention, the pumice becomes part of the hydrated calcium silicate (CSH) matrix, substantially eliminating any transition zone 32 between the pumice filler and the cement paste.

## Claims

1. A cementitious composition comprising:
(a) about 30 wt.% to about 75 wt.% calcium sulfate beta-hemihydrate;
(b) about 10 wt.% to about 40 wt.% Portland cement;
(c) about 4 wt.% to about 20 wt.% silica fume; and
(d) about 1 wt.% to about 40 wt.% pozzolanic filler.

2. A water resistant construction material obtainable by combining a cementitious composition with a slight stoichiometric excess of water, said cementitious composition comprising:
(a) about 30 wt.% to about 75 wt.% calcium sulfate beta-hemihydrate;
(b) about 10 wt.% to about 40 wt.% Portland cement;
(c) about 4 wt.% to about 20 wt.% silica fume; and
(d) about 1 wt.% to about 40 wt.% pozzolanic filler.

3. A water resistant construction material having a thickness of about 1/8 inch (about 3 mm), said material obtainable by combining a cementitious composition with a slight stoichiometric excess of water, said cementitious composition comprising:
(a) about 30 wt.% to about 75 wt.% calcium sulfate beta-hemihydrate;
(b) about 10 wt.% to about 40 wt.% Portland cement;
(c) about 4 wt.% to about 20 wt.% silica fume; and
(d) about 1 wt.% to about 40 wt.% pozzolanic filler.

4. A board comprising:
first and second cover sheets; and
a cementitious composition disposed between the first and second cover sheets, said composition being obtainable by reaction between water and a composition comprising:
(a) about 30 wt.% to about 75 wt.% calcium sulfate beta-hemihydrate;
(b) about 10 wt.% to about 40 wt. Portland cement;
(c) about 4 wt.% to about 20 wt.% silica fume; and
(d) about 1 wt.% to about 40 wt.% pozzolanic filler.

5. The composition, material, or board of any one of claims 1 to 4, wherein said cementitious composition is substantially free of alpha-gypsum.

6. The composition, material, or board of any one of claims 1 to 4, wherein the Portland cement is Type III Portland cement.

7. The composition or material of claim 1 or claim 2, wherein the silica fume is about 4 wt% to about 8 wt.% of the composition.

8. The composition, material, or board of any one of claims 1, 2 or 4, wherein the pozzolanic filler is about 10 wt% to about 40 wt.% of the composition and comprises pumice.

9. The composition of claim 1 wherein the pozzolanic filler is about 1 wt% to about 10 wt.% of the composition and comprises Fillite.

10. The composition or material of any one of claims 1 to 3, wherein the composition comprises an effective amount of at least one of set control additives, water reducing agents and water repellent additives.

11. A self-leveling floor composition comprising:
(i) about 25 wt.% to about 75 wt.% of the composition of claim 1; and
(ii) about 75 wt.% to about 25 wt.% sand.

12. The self-leveling floor composition of claim 11, wherein said composition (i) comprises about 71 wt.% calcium sulfate beta-hemihydrate, about 20 wt.% Portland cement, about 6 wt.% silica fume and about 2 wt.% pozzolanic filler.

13. The self-leveling floor composition of claim 12, wherein said pozzolanic filler is Fillite.

14. A road patching composition comprising:
(i) about 25 wt.% to about 100 wt.% of the composition of claim 1; and
(ii) about 75 wt.% to about 0 wt.% sand.

15. Fire-proofing sprays and firestopping materials comprising the composition of claim 1, wherein said pozzolanic filler comprises at least one of Fillite and perlite.

16. Fire-proofing sprays and firestopping materials of claim 15 further comprising about 1 wt.% to about 30 wt.% unexpanded vermiculite.

17. The fire-proofing sprays and firestopping materials of claim 15 further comprising:
(e) up to about 2 wt.% glass fibers; and
(f) up to about 2 wt.% of a thickening agent selected from the group consisting of cellulose derivatives, acrylic resins and mixtures thereof.

18. A fiberboard comprising:
(i) about 70 wt.% to about 90 wt.% of the composition of claim 1; and
(ii) about 30 wt.% to about 10 wt.% of a fiber component selected from the group consisting of wood fibers, paper fibers, glass fibers, polyethylene fibers, polypropylene fibers, nylon fibers, and other plastic fibers.

19. The construction material of claim 3, wherein the cementitious composition comprises:
(a) about 70 wt.% to about 75 wt.% calcium sulfate beta hemihydrate;
(b) about 15 wt.% to about 25 wt.% Portland cement;
(c) about 4 wt.% to about 8 wt.% silica fume; and
(d) about 1 wt.% to about 10 wt.% pozzolanic filler.

20. The board of claim 4, wherein the first and second cover sheets are made from at least one of a fiberglass matt and a fiberglass scrim.

21. A method of preparing a construction material comprising the steps of:
(a) mixing about 30 wt.% to about 75 wt.% calcium sulfate beta-hemihydrate, about 10 wt.% to about 40 wt.% Portland cement, about 4 wt.% to about 20 wt.% silica fume, and about 1 wt.% to about 40 wt.% pozzolanic filler to result in a cementitious composition; and
(b) mixing the cementitious composition formed in step (a) with a slight stoichiometric excess of water.

22. The method of claim 21 further comprising:
(c) pouring the cementitious composition on a first cover sheet; and
(d) placing a second cover sheet over the cementitious composition.

23. The method of claim 22 wherein the first and second cover sheets are made from at least one of a fiberglass matt and a fiberglass scrim.

24. The method of claim 22 further comprising:
(e) cutting the material produced in step (d) into boards; and
(f) curing the boards at room temperature and a humidity of about 30% to about 90% for one to seven days.

25. The method of claim 22 further comprising:
(e) cutting the material produced in step (d) into boards; and
(f) wrapping the boards in plastic for at least about three days.

## Patentansprüche

1. Eine zementartige Zusammensetzung, enthaltend:
(a) etwa 30 Gew.-% bis etwa 75 Gew.-% Calciumsulfat-Beta-Hemihydrat;
(b) etwa 10 Gew.-% bis etwa 40 Gew.-% Portland-Zement;
(c) etwa 4 Gew.-% bis etwa 20 Gew.-% Quarzstaub; und
(d) etwa 1 Gew.-% bis etwa 40 Gew.-% pozzolanisches Füllmaterial.

2. Ein wasserbeständiges Baumaterial, erhältlich durch Kombinieren einer zementartigen Zusammensetzung mit einem kleinen stöchiometrischen Überschuß an Wasser; besagte zementartige Zusammensetzung umfassend:
(a) etwa 30 Gew.-% bis etwa 75 Gew-% Calciumsulfat-Beta-Hemihydrat;
(b) etwa 10 Gew.-% bis etwa 40 Gew.-% Portland-Zement;
(c) etwa 4 Gew.-% bis etwa 20 Gew.-% Quarzstaub; und
(d) etwa 1 Gew.-% bis etwa 40 Gew.-% pozzolanisches Füllmaterial.

3. Ein wasserbeständiges Baumaterial mit einer Dicke von etwa 1/8 Zoll (etwa 3 mm), wobei das Material durch Kombinieren einer zementartigen Zusammensetzung mit einem kleinen stöchiometrischen Überschuß an Wasser erhältlich ist; besagte zementartige Zusammensetzung umfassend:
(a) etwa 30 Gew.-% bis etwa 75 Gew-% Calciumsulfat-Beta-Hemihydrat;
(b) etwa 10 Gew.-% bis etwa 40 Gew.-% Portland-Zement;
(c) etwa 4 Gew.-% bis etwa 20 Gew.-% Quarzstaub; und
(d) etwa 1 Gew.-% bis etwa 40 Gew.-% pozzolanisches Füllmaterial.

4. Eine Platte, umfassend:
eine erste und zweite Deckschicht; und
eine zementartige Zusammensetzung, die zwischen der ersten und zweiten Deckschicht angeordnet ist, wobei die besagte Zusammensetzung durch Reaktion von Wasser und einer Zusammensetzung erhältlich ist, die folgende Bestandteile umfaßt:
(a) etwa 30 Gew.-% bis etwa 75 Gew-% Calciumsulfat-Beta-Hemihydrat;
(b) etwa 10 Gew.-% bis etwa 40 Gew.-% Portland-Zement;
(c) etwa 4 Gew.-% bis etwa 20 Gew.-% Quarzstaub; und
(d) etwa 1 Gew.-% bis etwa 40 Gew.-% pozzolanisches Füllmaterial.

5. Die Zusammensetzung, das Material oder die Platte nach einem der Ansprüche 1 bis 4, wobei die besagte zementartige Zusammensetzung im wesentlichen frei von Alpha-Gips ist.

6. Die Zusammensetzung, das Material oder die Platte nach einem der Ansprüche 1 bis 4, wobei der Portland-Zement Typ III Portland-Zement ist.

7. Die Zusammensetzung oder das Material nach Anspruch 1 oder Anspruch 2, wobei der Quarzstaub etwa 4 Gew.-% bis etwa 8 Gew.-% der Zusammensetzung beträgt.

8. Die Zusammensetzung, das Material oder die Platte nach einem der Ansprüche 1, 2 oder 4, wobei das pozzolanische Füllmaterial etwa 10 Gew.-% bis etwa 40 Gew.-% der Zusammensetzung ausmacht und Bimsstein enthält.

9. Die Zusammensetzung nach Anspruch 1, wobei das pozzolanische Füllmaterial etwa 1 Gew.-% bis etwa 10 Gew.-% der Zusammensetzung ausmacht und Fillit enhält.

10. Die Zusammensetzung oder das Material nach einem der Ansprüche 1 bis 3, wobei die Zusammensetzung eine wirksame Menge von mindestens einem Aushärtungssteuerungszusatz, einem Mittel zur Verminderung des Wasserbedarfs oder einem wasserabstoßenden Zusatz umfaßt.

11. Eine selbstverlaufende Estrich-Zusammensetzung, enthaltend:
(i) etwa 25 Gew.-% bis etwa 75 Gew.-% der Zusammensetzung nach Anspruch 1; und
(ii) etwa 75 Gew.-% bis etwa 25 Gew.-% Sand.

12. Die selbstverlaufende Estrich-Zusammensetzung nach Anspruch 11, wobei die besagte Zusammensetzung (i) etwa 71 Gew.-% Calciumsulfat Beta-Hemihydrat, etwa 20 Gew.-% Portland-Zement, etwa 6 Gew.-% Quarzstaub und etwa 2 Gew.-% pozzolanisches Füllmaterial enthält.

13. Die selbstverlaufende Estrich-Zusammensetzung nach Anspruch 12, wobei besagtes pozzolanisches Füllmaterial Fillit ist.

14. Eine Straßenausbesserungs-Zusammensetzung, enthaltend:
(i) etwa 25 Gew.-% bis etwa 100 Gew.-% der Zusammensetzung nach Anspruch 1; und
(ii) etwa 75 Gew.-% bis etwa 0 Gew.-% Sand.

15. Feuerschutz-Sprays und Feuerschutz-Materialien, die die Zusammensetzung nach Anspruch 1 enthalten, wobei das besagte pozzolanische Füllmaterial zumindest Fillit und/oder Perlit enthält.

16. Feuerschutz-Sprays und Feuerschutz-Materialien nach Anspruch 15, die darüber hinaus etwa 1 Gew.-% bis etwa 30 Gew.-% nichtexpandiertes Vermikulit enthalten.

17. Die Feuerschutz-Sprays und Feuerschutz-Materialien nach Anspruch 15, wobei diese ferner enthalten:
(e) bis zu etwa 2 Gew.-% Glasfasern; und
(f) bis zu etwa 2 Gew.-% eines Verdickungsmittels, das aus der aus Cellulose-Derivaten, Acrylharzen und deren Mischungen bestehenden Gruppe gewählt ist.

18. Eine Faserplatte, enthaltend:
(i) etwa 70 Gew.-% bis etwa 90 Gew.-% der Zusammensetzung nach Anspruch 1; und
(ii) etwa 30 Gew.-% bis etwa 10 Gew.-% einer Faserkomponente, die aus der Gruppe ausgewählt ist, die aus Holzfasern, Papierfasern, Glasfasern, Polyethylenfasern, Polypropylenfasern, Nylonfasern und anderen Plastikfasern besteht.

19. Das Baumaterial nach Anspruch 3, wobei die zementartige Zusammensetzung folgende Bestandteile enthält:
(a) etwa 70 Gew.-% bis etwa 75 Gew-% Calciumsulfat-Beta-Hemihydrat;
(b) etwa 15 Gew.-% bis etwa 25 Gew.-% Portland-Zement;
(c) etwa 4 Gew.-% bis etwa 8 Gew.-% Quarzstaub; und
(d) etwa 1 Gew.-% bis etwa 10 Gew.-% pozzolanisches Füllmaterial.

20. Eine Platte nach Anspruch 4, wobei die erste und zweite Deckschicht zumindest aus einer Faserglasmatte und/oder einem Faserglasvlies hergestellt wurden.

21. Ein Verfahren zur Herstellung eines Baumaterials, das die folgenden Schritte umfaßt:
(a) Mischen von etwa 30 Gew.-% bis etwa 75 Gew.-% Calciumsulfat-Beta-Hemihydrat, etwa 10 Gew.-% bis etwa 40 Gew.-% Portland-Zement, etwa 4 Gew.-% bis etwa 20 Gew.-% Quarzstaub und etwa 1 Gew.-% bis etwa 40 Gew.-% pozzolanischem Füllmaterial, so dass sich eine zementartige Zusammensetzung ergibt; und
(b) Mischen der in Schritt (a) hergestellten zementartigen Zusammensetzung mit einem kleinem stöchiometrischen Überschuß an Wasser.

22. Das Verfahren nach Anspruch 21, weiterhin umfassend:
(c) Gießen der zementartigen Zusammensetzung auf eine erste Deckschicht; und
(d) Bringen einer zweiten Deckschicht über die zementartige Zusammensetzung.

23. Das Verfahren nach Anspruch 22, wobei die erste und zweite Deckschicht zumindest aus einer Faserglasmatte und/oder einem Faserglasvlies hergestellt werden.

24. Das Verfahren nach Anspruch 22, weiterhin umfassend:
(e) Zuschneiden des in Schritt (d) produzierten Materials zu Brettern; und
(f) Härten der Bretter bei Raumtemperatur und einer Feuchtigkeit von etwa 30 bis etwa 90% in einem Zeitraum von einem bis sieben Tagen.

25. Das Verfahren nach Anspruch 22, weiterhin umfassend:
(e) Zuschneiden des in Schritt (d) produzierten Materials zu Brettern; und
(f) Wickeln dieser Bretter in Plastikhüllen für einen Zeitraum von zumindest etwa drei Tagen.

## Revendications

1. Composition cimentaire comprenant :
(a) environ 30 % en poids à environ 75 % en poids de bêta-hémihydrate de sulfate de calcium;
(b) environ 10 % en poids à environ 40 % en poids de ciment Portland;
(c) environ 4 % en poids à environ 20 % en poids de fumée de silice; et
(d) environ 1 % en poids à environ 40 % en poids de charge pouzzolanique.

2. Matériau de construction résistant à l'eau obtenable en combinant une composition cimentaire avec un léger excès stoechiométrique d'eau, ladite composition cimentaire comprenant :
(a) environ 30 % en poids à environ 75 % en poids de bêta-hémihydrate de sulfate de calcium;
(b) environ 10 % en poids à environ 40 % en poids de ciment Portland;
(c) environ 4 % en poids à environ 20 % en poids de fumée de silice; et
(d) environ 1 % en poids à environ 40 % en poids de charge pouzzolanique.

3. Matériau de construction résistant à l'eau ayant une épaisseur d'environ 1/8 pouce (environ 3 mm), ledit matériau étant obtenable en combinant une composition cimentaire avec un léger excès stoechiométrique d'eau, ladite composition cimentaire comprenant :
(a) environ 30 % en poids à environ 75 % en poids de bêta-hémihydrate de sulfate de calcium;
(b) environ 10 % en poids à environ 40 % en poids de ciment Portland;
(c) environ 4 % en poids à environ 20 % en poids de fumée de silice; et
(d) environ 1 % en poids à environ 40 % en poids de charge pouzzolanique.

4. Panneau comprenant :
une première et une seconde feuille de recouvrement; et
une composition cimentaire disposée entre la première et la seconde feuille de recouvrement, ladite composition étant obtenable par la réaction entre de l'eau et une composition comprenant :
(a) environ 30 % en poids à environ 75 % en poids de bêta-hémihydrate de sulfate de calcium;
(b) environ 10 % en poids à environ 40 % en poids de ciment Portland;
(c) environ 4 % en poids à environ 20 % en poids de fumée de silice; et
(d) environ 1 % en poids à environ 40 % en poids de charge pouzzolanique.

5. Composition, matériau ou panneau suivant l'une quelconque des revendications 1 à 4, dans lequel la composition cimentaire précitée est essentiellement exempte d'alpha-gypse.

6. Composition, matériau ou panneau suivant l'une quelconque des revendications 1 à 4, dans lequel le ciment Portland est du ciment Portland de type III.

7. Composition ou matériau suivant la revendication 1 ou la revendication 2, dans lequel la fumée de silice constitue environ 4 % en poids à environ 8 % en poids de la composition.

8. Composition, matériau ou panneau suivant l'une quelconque des revendications 1, 2 et 4, dans lequel la charge pouzzolanique constitue environ 10 % en poids à environ 40 % en poids de la composition et comprend de la pierre ponce.

9. Composition suivant la revendication 1, dans laquelle la charge pouzzolanique constitue environ 1 % en poids à environ 10 % en poids de la composition et comprend de la Fillite.

10. Composition ou matériau suivant l'une quelconque des revendications 1 à 3, dans lequel la composition comprend une quantité efficace d'au moins un composé parmi les additifs de contrôle de prise, les agents de réduction d'eau et les additifs hydrofuges.

11. Composition de sol autonivelante comprenant :
(i) environ 25 % en poids à environ 75 % en poids de la composition de la revendication 1; et
(ii) environ 75 % en poids à environ 25 % en poids de sable.

12. Composition de sol autonivelante suivant la revendication 11, dans laquelle ladite composition (i) comprend environ 71 % en poids de bêta-hémihydrate de sulfate de calcium, environ 20 % en poids de ciment Portland, environ 6 % en poids de fumée de silice et environ 2 % en poids de charge pouzzolanique.

13. Composition de sol autonivelante suivant la revendication 12, dans laquelle ladite charge pouzzolanique est de la Fillite.

14. Composition de rebouchage de route comprenant :
(i) environ 25 % en poids à environ 100 % en poids de la composition de la revendication 1; et
(ii) environ 75 % en poids à environ 0 % en poids de sable.

15. Pulvérisations d'ignifugation et matériaux coupe-feu comprenant la composition de la revendication 1, dans lesquels la charge pouzzolanique précitée comprend au moins de la Fillite ou de la perlite.

16. Pulvérisations d'ignifugation et matériaux coupe-feu suivant la revendication 15, comprenant de plus environ 1 % en poids à environ 30 % en poids de vermiculite non expansée.

17. Pulvérisations d'ignifugation et matériaux coupe-feu suivant la revendication 15, comprenant de plus :
(e) jusqu'à environ 2 % en poids de fibres de verre; et
(f) jusqu'à environ 2 % en poids d'un agent épaississant choisi dans le groupe comprenant les dérivés cellulosiques, les résines acryliques et leurs mélanges.

18. Panneau de fibres comprenant :
(i) environ 70 % en poids à environ 90 % en poids de la composition de la revendication 1; et
(ii) environ 30 % en poids à environ 10 % en poids d'un composant fibreux choisi dans le groupe comprenant les fibres de bois, les fibres de papier, les fibres de verre, les fibres de polyéthylène, les fibres de polypropylène, les fibres de Nylon et les fibres d'autres matières plastiques.

19. Matériau de construction suivant la revendication 3, dans lequel la composition cimentaire comprend :
(a) environ 70 % en poids à environ 75 % en poids de bêta-hémihydrate de sulfate de calcium;
(b) environ 15 % en poids à environ 25 % en poids de ciment Portland;
(c) environ 4 % en poids à environ 8 % en poids de fumée de silice; et
(d) environ 1 % en poids à environ 10% en poids de charge pouzzolanique.

20. Panneau suivant la revendication 4, dans lequel la première et la seconde feuille de recouvrement sont faites d'au moins une matière choisie parmi un mat de fibres de verre et un tissu non tissé de fibres de verre.

21. Procédé de préparation d'un matériau de construction comprenant les étapes suivantes :
(a) le mélange d'environ 30 % en poids à environ 75 % en poids de bêtahémihydrate de sulfate de calcium, d'environ 10 % en poids à environ 40 % en poids de ciment Portland, d'environ 4 % en poids à environ 20 % en poids de fumée de silice et d'environ 1 % en poids à environ 40 % en poids de charge pouzzolanique pour obtenir une composition cimentaire; et
(b) le mélange de la composition cimentaire formée dans l'étape (a) avec un léger excès stoechiométrique d'eau.

22. Procédé suivant la revendication 21, comprenant de plus:
(c) le versement de la composition cimentaire sur une première feuille de recouvrement; et
(d) le placement d'une seconde feuille de recouvrement sur la composition cimentaire.

23. Procédé suivant la revendication 22, dans lequel la première et la seconde feuille de recouvrement sont faites d'au moins une matière choisie parmi un mat de fibres de verre et un tissu non tissé de fibres de verre.

24. Procédé suivant la revendication 22, comprenant de plus :
(e) le découpage du matériau produit dans l'étape (d) en panneaux; et
(f) le durcissement des panneaux à la température ambiante et à une humidité d'environ 30 % à environ 90 % pendant un à sept jours.

25. Procédé suivant la revendication 22, comprenant de plus :
(e) le découpage du matériau produit dans l'étape (d) en panneaux; et
(f) l'emballage des panneaux dans du plastique pendant au moins environ trois jours.
